# EUROPEAN PATENT APPLICATION

(11) **EP 0 822 355 A2**
(43) Date of publication of application: **04.02.1998**
(21) Application number: 97202299.0
(22) Date of filing: 28.07.1997
(51) Int. Cl.: F16H 3/72, F16H 47/08

(54) **Continuously variable transmission**

(30) Priority: 29.07.1996 NL 1003702
(71) Applicant: de Jong, Maud, 1017 RM Amsterdam (NL)
(72) Inventor: Blaazer, M.W., 1911 ME Uitgeest (NL)

(57) **Abstract**

The invention is about a continuous variable transmission, with an outgoing shaft (9) with a variable speed and two or more ingoing shafts (1), who, at choice, supply or withdraw torque. In this way the speed of one of the ingoing shafts (1) can be increased without load. In order to enhance a favourable speeding up of one of the power supplying shafts it is possible to supply this shaft with an additional torque. With this invention, it is possible to disengage in- and outgoing shafts practically instantaneously

## Description

The ingoing shaft (1) is by means of satellite wheels (2) connected with the rim of a gearwheel (3). This gear has also an external gears.

By means of these gears the gearwheel (3) is connected with the pinion of an hydropump (5). This pump pumps a fluid in an open or closed loop. An adjustable control valve regulates the resistance in the fluid loop and thus controls the power consumption of the hydropump. A fluid-cooler (7) controls the fluid temperature. The satellite wheels are connected with the satellite carrier (8). The satellite carrier is connected with the outgoing shaft (9).

When the control valve is opened, the fluid will experience no resistance and thus the gearwheel (3) can revolve without any resistance. In this way no torque can be transmitted to the outgoing shaft. By closing the control valve, the fluid experiences more resistance and thus the hydropump will impose a torque on the gearwheel (3).

By increasing the resistance in the fluidloop, the torque on wheel (3) can be increased to a level equal or more than the torque needed to rotate the outgoing shaft, and thus the outgoing shaft starts to rotate. When the fluid flow is totally stopped, the wheel (3) stops to rotate and in this situation all ingoing torque is transmitted to the outgoing shaft.

The described principle shows a transmission with a continuos variable outgoing torque, speed and/or power output.

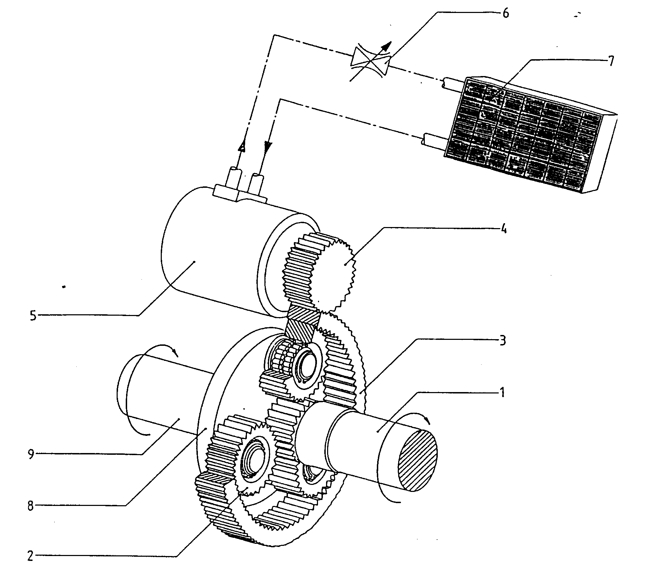

## Claims

1. The continuos variable transmission, with the ingoing and outgoing shaft (1) and (9), who, at choice supply or withdraw torque or power, and with which by means of gearwheel (3) from one or more planetary transmissions, torque can be supplied or delivered, with the CLAIM, that the outgoing torque, or power, can be adjusted between zero and at choice the sum or difference of the ingoing torque supplied by shaft (1), or, when required, shaft (9) and hydropump (5). Hydropump (5) is able to supply and withdraw torque, as well to stop gear (3) completely. In this case the outgoing speed is controlled by the planetary transmission
